# EUROPEAN PATENT SPECIFICATION

(11) **EP 4 172 676 B1**
(45) Date of publication and mention of the grant of the patent: **02.12.2026**
(21) Application number: 21737071.7
(22) Date of filing: 29.06.2021
(51) Int. Cl.: G02B 26/08

(54) **LIGHT BEAM SCANNER**
LICHTSTRAHLSCANNER
DISPOSITIF DE BALAYAGE DE FAISCEAU LUMINEUX

(30) Priority: 29.06.2020 EP 20182810
(43) Date of publication of application: 03.05.2023
(73) Proprietor: Brighterwave Inc., 33720 Tampere (FI); poLight ASA, 3125 Tønsberg (NO)
(72) Inventor: KONTTINEN, Janne, 33900 Tampere (FI); CRAEN, Pierre, 4053 Embourg (BE); KILPINEN, Janne Tapani, 37800 Akaa (FI)
(74) Representative: Plougmann Vingtoft a/s
(86) International application number: PCT/EP2021/067798
(87) International publication number: WO 2022/002907

(56) References cited:
- WO-A1-2012/000556
- WO-A1-2020/074711
- DE-A1- 19 514 783

## Description

### FIELD OF THE INVENTION

The invention relates to optical systems arranged for generating a scanning beam capable of scanning in one or more direction.

### BACKGROUND OF THE INVENTION

There is a trend to miniaturize opto-electronic systems in order to enable implementation in compact devices such as smart phones, IOT sensors, but also in industrial, automotive and medical systems such as medical invasive systems where possibly costly optical scanning systems are used today. Accordingly, issues like system dimensions, power consumption and scanning bandwidth are essential in order to extend the use of such scanning beam systems in e.g. compact devices.

WO 2012/000556 A1 discloses a MEMS micro-mirror device comprising a first micro-mirror, a reflective metal element and a second micro-mirror for sequentially reflecting an incident light beam entering through a cap member. The first micro-mirror and the second micro-mirror oscillate along different oscillation axes.

DE 195 14 783 A1 discloses a scanning device comprising a first mirror and a second mirror. An incident light beam is reflected several times between the first mirror and the second mirror to increase the angle of the output light beam.

WO 2020/074711 A1 discloses an optical component comprising a transparent, deformable, non-fluid body, a reflector and an actuator.

Accordingly, there is a need for improving the scanning beam systems with respect to the above mentioned issues such as reducing the size of the scanning beam systems to enable use in compact electronic devices.

### SUMMARY OF THE INVENTION

It is an object of the invention to provide an opto-electric scanning beam system which alleviates problems with size, power consumption, scanning bandwidth and other problems.

In a first aspect there is provided an opto-mechanical scanning device according to claim 1.

The first reflective surface is adjustable to deflect the incident beam in the plane of incidence to generate an output scanning beam. Since all reflections takes place within the non-fluid body and since the internally reflected beam is refracted out to the surrounding air, the angular amplification of the angle of the scanning beam relative to the angular variations of the first reflective surface is amplified proportionally with the refractive index of the non-fluid body, at least in a small angle approximation.

For lager angles of incidence, the amplification becomes even larger due to the sine function in the law of refraction, i.e. Snell's law.

The refraction of the beam out of the non-fluid body is a consequence of the non-zero angle of incidence at the second window and the refractive index of the non-fluid body which is higher than the refractive index of the surrounding air.

By all reflections taking place within the non-fluid body is understood that reflections takes place at the interface between the reflecting surface and the non-fluid body or the interface between the reflecting surface and any intermediate layer having a refractive index which is equal or substantially equal to the refractive index of the non-fluid body, or at least higher than the refractive index of air, where the intermediate layer connects the non-fluid body with the reflecting surface. Thus, the incident beam and the reflections of the incident beam propagates through a medium such as the non-fluid body which has more or less the same refractive index throughout the propagation path until the refraction out through the second window. The refractive index of the medium is higher than the refractive index of the surrounding air.

The first and second reflective surfaces are arranged adjacent to the first and second body surfaces meaning that the reflective surfaces are in direct contact with the body surfaces or in indirect contact via an intermediate layer having the same or substantially the same refractive index as the non-fluid body. For example, the intermediate layer could comprise an adhesive or an antireflection layer provided on the reflective surfaces. Accordingly, the reflective surfaces are mechanically engaged with the non-fluid body so that a tilt of the reflective surface, or the element embodying the tilted reflective surface, causes a deformation of the non-fluid body.

The first and second reflective surfaces, which may be reflective surfaces such as metal coatings of elements such as rigid elements, e.g. glass elements, may be arranged abutting the respective first and second body surfaces. Thus, the non-fluid body constitutes a medium in which the reflections of the incident beam propagates.

The adjustable angle of the first reflective surface is adjustable relative to a stationary reference such as the incident light beam, i.e. the light source providing the incident beam.

Preferably, light source providing the incident beam and the second reflective surface may fixed to a common support, and/or actuators arranged to tilt any of the reflective surfaces may be fixed to the common support.

The orientation of the second reflective surface M2 may fixed or substantially fixed relative to the incident light beam 191, so that the first reflective surface is tilted relative to the second reflective surface.

The sandwiched structure resulting from the non-fluid body sandwiched between the first and second reflective surfaces provides a compact opto-electric scanning beam system.

Such linearly controlled mirror tilt devices are of interest for various scanning beam applications, especially in raster scanning for projecting high-resolution pictures and precision 3D imaging.

Due to the possibility to make the scanning device compact, it may be possible to obtain a miniaturized opto-electromechanical capable of being implemented in various compact electronic devices such as mobile phone, wearables, IOT sensors as well as industrial and automotive application to not mention medical applications such as medical invasive systems.

For example, the second reflective surface, the first window and the second window are arranged as top windows, i.e. opposite to the same surface of the non-fluid body such as adjacent to the second body surface.

Alternatively, the first and/or the second windows may be arranged as side windows, i.e. so that the first window and/or the second window are arranged adjacent to opposite body surfaces of the non-fluid body. For example, the opposite body surfaces are non-parallel, such as perpendicular or substantially perpendicular, with the first body surface and/or the second body surface. Or the opposite body surfaces constitutes end-surfaces of an extension of the non-fluid body which extends along the propagation direction.

According to an embodiment, the scanning device comprises a third reflective surface, wherein
- the first body surface is arranged adjacent to the first and third reflective surfaces, and
- the actuator system is arranged to move the first and third reflective surfaces, i.e. relative to a stationary reference such as the first window or the light source, so that an angle of the first and third reflective surfaces is adjustable.

A third reflective surface enables the at least one incident light beam to be transmitted out of the non-fluid body at the same face as the first window is located.

The third reflective surface is arranged adjacent to the surface of the non-fluid body similarly to the first and second reflective surfaces.

Advantageously, by tilting both the first and second reflective surface the scanning angle range of the outputted scanning beam can be significantly amplified compared to the tilting range of the reflective surfaces. For example, it may be possible with three reflections to generate a +/-30 degrees scanning angle range of the scanning beam based on an approximately +/-4 degrees tilting range of the first and second reflective surfaces.

Thus, for an angle of incidence of the light beam relative to the second body surface, locations of the first, second and third reflective surfaces are arranged so that the incident light beam is reflected successively by the first reflecting surface, the second reflecting surface, and the third reflecting surface.

According to an embodiment, the first window, the second window and the second reflective surface are embodied by separate, non-contacting elements. For example the first and second windows may be constituted by transparent elements such as glass elements, and the second reflective surface may be the reflective surface of a mirror element.

According to an embodiment, the second reflective surface and the first window extend side-by-side over at least a portion of the second body surface along a propagation direction of the incident light beam. Advantageously, this arrangement provides improved possibilities for generating a larger angular scanning range of the outputted scanning beam by providing extended lengths along the propagation direction and along the direction of displacement of the reflected beams.

According to an embodiment, the opto-mechanical scanning device further comprises an embedded reflective surface being embedded in the transparent, deformable, non-fluid body and arranged to direct the incident light beam towards the first reflective surface.

Advantageously, the embedded reflective surface such as a mirror element allows the incident beam to be injected at an substantially arbitrary angle at any suitable surface. For example, the beam may be injected perpendicularly to the first window, e.g. from the side surface of the non-fluid body such as a side surface being perpendicular the first and/or second reflective surfaces. Two or more embedded reflective surfaces may be used for injection of corresponding two or more incident light beams.

According to an embodiment, the opto-mechanical scanning device comprises a second actuator system comprising one or more actuators arranged to move the second reflective surface so that an angle of the second reflective surface is adjustable.

Advantageously, by adjusting the angle of the second reflective surface relative to a stationary reference such as the incident light beam and relative to the first and/or the third reflective surfaces, the angular amplification may be further amplified and/or the propagation of the beam may be adjusted e.g. to avoid beam cropping.

According to an embodiment, the second reflective surface is supported by a further transparent, deformable, non-fluid body, located between the second reflective surface and the transparent, deformable, non-fluid body.

Advantageously, by arranging the further transparent, deformable, non-fluid body, separately from the main non-fluid body, a possible actuated tilting of the second reflective surface may be performed without causing deformation of the main non-fluid body.

According to an embodiment, the actuator system is arranged to move the first and third reflective surfaces independently of each other so that the angles of the first reflective surface and the third surface can be adjusted independently of each other.

Independent tilting of the first and third reflective surfaces may be advantageous for use of smaller reflective elements instead of a common larger reflective element which could easier suffer from mirror deformations. Furthermore, independent tilting may be advantageous for preventing beam cropping.

According to an embodiment, the scanning device comprises a third actuator system arranged to move the third reflective surface or other reflective surface comprised by the opto-mechanical scanning device so that a further angle of the third reflective surface or the other reflective surface is adjustable to deflect the incident beam in a direction out of the plane of incidence of the incident beam, such as perpendicular to the plane of incidence.

The plane of incidence may be defined relative to the first reflection surface, i.e. the plane of incidence spanned by the light ray incident to the first reflection surface and the normal thereof. Accordingly, the first reflection surface defines a first plane and the third actuator system is able to move the third reflective surface or other reflective surface to deflect the incident beam in a direction in a second plane which is not parallel with the first plane, but could be perpendicular to the first plane. In this way the outputted scanning beam can be controlled to be deflected in to perpendicular output planes, such as two perpendicular output planes that are perpendicular to the second window or output window.

Advantageously, the further actuator system such as a third actuator system provides 2D scanning capabilities of the outputted scanning beam e.g. to achieve 2D image projection or 3D scanning such as 3D distance scanning.

According to an embodiment, the at least one incident light beam comprises two or more incident light beams having different incident angles relative to the second body surface.

According to an embodiment, the second window is further arranged to reflect a second incident light beam of the at least one incident light beams towards the third reflective surface, and the first window is further arranged to receive and transmit the second incident light beam out of non-fluid body.

In this case, the first window may similarly be arranged to reflect a first incident light beam of the at least one incident light beams towards the first reflective surface, and the second window is further arranged to receive and transmit the first incident light beam out of non-fluid body.

Advantageously, two or more beams such as the first and second incident light beams may be outputted as first and second scanning beams for scanning different surfaces. The combined reflection and transmission properties of the first and second windows may be achieved e.g. by polarizing or wavelength-selective folding mirrors applied to the first and second windows.

According to an embodiment, an optical property such as the refractive index or an Abbe number of the non-fluid body and/or any of the first and second windows is different at at least two locations of the non-fluid body and/or of any of the first and second windows, such as wherein the optical property varies gradually dependent on the location along a given direction.

A second aspect of the invention relates to a light beam scanner, comprising the opto-mechanical scanning device according to the first aspect and a light device.

According to an embodiment, the light device comprises two or more light sources arranged to generate two or more incident light beams having different angles of incidence and/or different non-overlapping wavelength ranges.

According to an embodiment, the light beam scanner further comprises a controller arranged to sequentially power the two or more light sources dependent on an obtained tilt parameter relating to the angle of the reflective surface.

The controller may further be arranged to power the light sources dependent on the tilt parameter relating to the third reflective surface.

The angle such as the tilt angle of first or third reflective surface may be based on a control input or measured.

Advantageously, by sequentially controlling or powering the two or more light sources the angular scanning range can be extended.

According to an embodiment, the controller is arranged to power a first of the two or more light sources when the tilt parameter is within a first range and to power a second of the two or more light sources when the tilt parameter is within a second range which is different from the first range.

According to an embodiment, the light beam scanner comprises first and second light devices, where the first light device is arranged to inject one or more light beams into the first window and the second light device is arranged to inject one or more light beams into the second window.

A third aspect of the invention relates to method according to claim 17.

A fourth aspect of the invention relates to an electronic device comprising a light beam scanner according to the second aspect, wherein the electronic device is anyone of:
- a camera module,
- a portable computer device such as a smartphone, a watch, a tablet, such as an iPad^{®},
- a camera,
- a pair of spectacles,
- a measurement device arranged for scanning distances,
- an image projector arranged for creating an image by scanning light beams,
- another electronic device.

A fifth aspect of the invention relates to use of a light beam scanner according to claim 19.

In general, the various aspects and embodiments of the invention may be combined and coupled in any way possible within the scope of the invention as defined by the claims.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows an opto-mechanical scanning device,
Fig. 2 shows a first modification of the opto-mechanical scanning device,
Fig. 3 shows a second modification of the opto-mechanical scanning device,
Fig. 4 shows a third modification of the opto-mechanical scanning device,
Fig. 5 shows a fourth modification of the opto-mechanical scanning device,
Fig. 6 shows a fifth modification of the opto-mechanical scanning device,
Fig. 7 shows a sixth modification of the opto-mechanical scanning device,
Figs. 8A-8E show other modifications of the opto-mechanical scanning device,
Fig. 9 shows a seventh modification of the opto-mechanical scanning device,
Fig. 10 shows an eighth modification of the opto-mechanical scanning device,
Fig. 11 shows ray-tracing for different angles of incidence,
Figs. 12A-12B show other modifications of the opto-mechanical scanning device, and
Fig. 13 shows a principle of angular scanning amplification of the incident beam.

### DETAILED DESCRIPTION

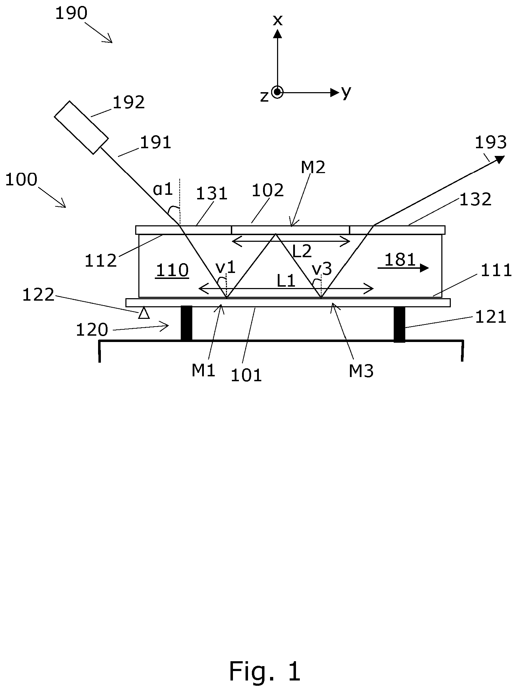

Fig. 1 shows an opto-mechanical scanning device 100 arranged to generate a scanning beam 193 by deflecting an incident light beam 191.

Fig. 1 further shows a light beam scanner 190 comprising the opto-mechanical scanning device 100 and a light device 192 such as a laser arranged to generate the incident light beam 191.

The scanning device 100 comprises a first reflective surface M1 and optionally a third reflective surface M3, which are arranged opposite, namely adjacent, to a first body surface 111 of a transparent, deformable, non-fluid body 110.

At the second body surface 112 of the non-fluid body 110 which is arranged opposite to the first body surface 111, a second reflective surface M2 is arranged opposite, namely adjacent, to the body surface.

The second reflective surface may be arranged fixed or substantially fixed, e.g. relative to the incident light beam 191, but may also be arranged to be moveable such as tiltable.

The coordinate system with x, y and z axes is fixed with the light source 192 which generates the light beam 191. In the example in Fig. 1, the incident beam 191 propagates in the xy-plane, and the first and second body surfaces 111, 112 are parallel with the zy-plane.

Thus, the reflective surfaces M1, M2, M3 may be arranged in contact with the first and second body surfaces 111, 112 or may be arranged with an intermediate layer, such as an adhesive or anti-reflection layer, between the reflective surfaces and the body surfaces. The reflective surfaces M1, M2, M3 are arranged to reflect an incident beam from the non-fluid body 110 back into the non-fluid body.

Accordingly, the first and second body surfaces 111, 112 are arranged optically connected and parallel or substantially parallel to their respective first, second and optionally third reflective surfaces M1,M2,M3.

The reflectance of any of the first, second and third reflective surfaces may be 100% or substantially 100%, at least with respect to the spectral range of light source. Alternatively, any of the first, second and third reflective surfaces may be configured as partial reflective surfaces providing e.g. 50% reflectance.

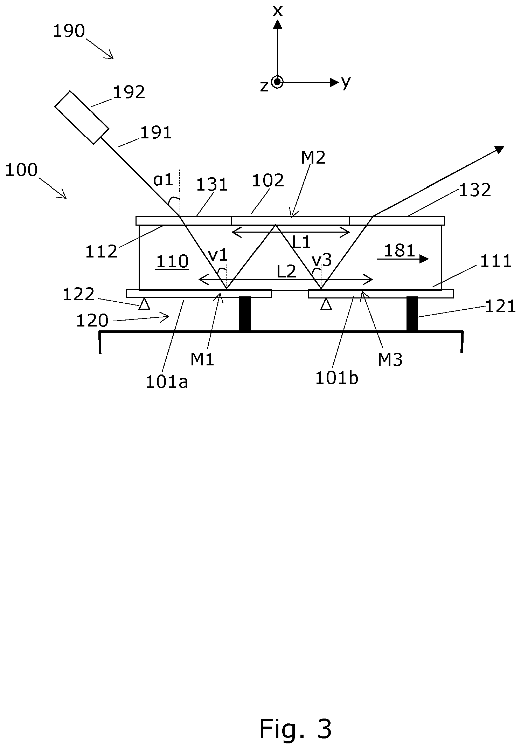

The first and third reflective surfaces M1, M3 may be arranged on a single reflector structure 101, or the first and third reflective surfaces M1, M3 may be arranged on separated, i.e. individual, reflector structures 101 (see Fig. 3). The separated reflector structures may allow the first and third reflective surfaces to move such as tilt independently from each other. The reflector structure 101 may be embodied by plate shaped glass structures or other rigid structures.

Similarly, the second reflective surface M2 may be arranged on another reflector structure 102.

The angle of the first and third reflective surfaces M1, M3, e.g. the angle between the first and third reflective surfaces M1, M3 and the second reflective surface M2 can be adjusted via a deformation of the non-fluid body 110. Said adjustable angles results in adjustable angles of incidence v1, v3 at the first and third reflective surfaces M1, M3.

The scanning device 100 comprises an actuator system 120 having one or more actuators 121 arranged to move the first and third reflective surfaces M1, M3 so that the angle of incidence v1, v3 at the first and third reflective surfaces M1, M3 is adjustable.

For example, the actuators 121 may be linear displacement actuators, such as linear piezoelectric motors, arranged to apply a displacement to the first and third reflective surfaces M1, M3. The displacement may be directed perpendicularly to the plane of the reflective surfaces M1, M3. One or more actuators 121 may be arranged to apply the displacement at respective one or more locations. It is understood that the displacement or motion applied to the reflective surfaces M1, M3 may be achieved by applying the motion to the reflector structure 101.

For example, the reflector structure 101 may be arranged hinged by means of a hinge function 122 such as a hinge structure arranged to provide rotation of the reflector structure 101 around a line, e.g. a hinge line extending along an extension of the reflector structure such as along the z-axis.

Alternative to or in addition to the hinge structure, the hinge function 122 may be embodied by the non-fluid polymer 110 which when deformed by means of the actuated reflector structure 101 provides the hinge function.

The connection between the actuators 121 and the reflector structure 101, i.e. a reflector component, may comprise a sliding contact (not shown) in order to limit or avoid generation of stresses in the reflector structure. The sliding contact may be embodied by a low friction contact between the actuator and a surface of the reflector structure 101. The low friction contact may be realized by pairs of low friction materials, i.e. the material of the contacting part of the actuator 121 should provide low friction or sufficiently low friction relative to the surface of the reflector structure 101. Examples of low friction materials comprise polyethylene and other plastic materials. Alternatively, the sliding contact may be embodied by an elastic connection fixed between the actuators 121 and the reflector structure 101. The elastic connection may comprise an elastic adhesive, an elastic flexure joint, elastic hinge structures, other elastic structures or a combination thereof.

The opto-mechanical scanning device further comprises a first window 131 arranged to receive and transmit the at least one incident light beam 191 into the non-fluid body 110 and a second window 132 arranged to receive and transmit the at least one incident light beam 191 out of the non-fluid body 110. The first and second windows 131, 132 may be are arranged at any one or more surfaces of the non-fluid body which are suitable, e.g. in view of the location/orientation of the light source 192.

The first and second windows 131, 132 may be made from transparent members such as glass plates attached to the non-fluid body 110.

The second reflector element 102 may be configured so that it comprises the first and second window 131, 132, in addition to the second reflective surface M2. For example, the second reflector element may be a transparent plate provided with a reflective coating which embodies the second reflective coating M2.

Alternatively, the first and second windows 131, 132 and the second reflective surface M2 may be embodied by separate, non-contacting elements, i.e. so that the second reflector element 102 only comprises the second reflective surface M2.

For example, the first and second windows 131, 132 may be arranged adjacent to one or more surfaces of the non-fluid body with the second reflective surface M2 arranged between the first and second window 131, 132 so that the incident light 191 beam can be transmitted out of the non-fluid body after being reflected successively by the first reflective surface M1 and afterwards by the second reflective surface M2.

The first window 131, the second window 132, and the first and second reflective surfaces M1, M2 may are arranged - e.g. sequentially along a propagation axis 181 extending in a direction parallel or substantially parallel with the first body surface 111 - with the first and second reflective surfaces M1, M2 arranged between the first window 131 and the second window 132, and where a first extension L1 of the extension of the first and third second reflective surfaces M1,M3 along the propagation direction 181 is greater than a second extension L2 of the second reflective surface M2 along the propagation axis 181. Accordingly, the first extension L1 encompasses the second extension L2.

The transparent deformable, non-fluid lens 110 is preferably made from an elastic material. Since the body is non-fluid, no fluid-tight enclosure is needed to hold the non-fluid body, and there is no risk of leakage. For example, the non-fluid body 110 is made from a soft polymer, which may include a number of different materials, such as silicone, polymer gels, a polymer network of cross-linked or partly cross-linked polymers, and a miscible oil or combination of oils. The elastic modulus of the non-fluid body may be larger than 300 Pa, thereby avoiding deformation due to gravitational forces in normal operation. The elastic modulus is generally in the range from 300 Pa to 100 MPa, such as in the range from 500 Pa to 10 MPa or from 800 Pa to 1 MPa. The refractive index of the non-fluid body is greater than the refractive index of air surrounding the opto-mechanical scanning device 100, such as larger than 1.3. The non-fluid body 110 may have a refractive index which is equal, substantially equal or close to the refractive index of the windows in order to reduce reflections at the boundaries of the non-fluid body 205.

The non-fluid body 110 may be configured to have different optical properties at different locations. Such different optical properties comprises different refractive indices, different Abbe numbers, other optical properties and combinations thereof.

The variation of the optical property of the non-fluid body may be achieved by varying the concentration of certain additives or fillings which is included in polymer, such as varying the concentration of the above-mentioned oil.

For example, the non-fluid body may be configured so that said optical property varies over different locations or varies gradually, such as in a stepped manner or continuously, in a given direction such as along the y-axis or other direction, or varies gradually in more than one direction. For example, a portion of the non-fluid body, e.g. a portion arranged adjacent to the second window 132, may have a first optical property whereas the remaining non-fluid body has a second optical property, with the first and second optical properties being different.

Similarly, the first and second windows 131, 132 may have different optical properties including the above-mentioned optical properties. For example, the first window 131 may have a first refractive index and the second window 132 may have a second different refractive index.

Further, anyone of the first and second windows 131, 132, may be configured so that said optical property is different for different locations within the windows or varies gradually, such as in a stepped manner or continuously, in one or more directions such as along the y-axis or radially. For example, the refractive index of any of the first and second windows may be varied to achieve the effect of a GRIN lens.

The scanning device 100 may be configured with only the first reflective surface M1 and the second reflective surface M2. In this case, the second window 132 could be placed at the second body surface 112. In a more preferred embodiment, the scanning device 100 further comprises the third reflective surface M3 in order to provide a larger scanning angle range.

As shown in Fig. 1, the second reflective surface M2, and the first and second windows 131, 132 may be arranged opposite such as adjacent to the same surface of the non-fluid body, here the second body surface 112.

In Fig. 1, the first and second windows 131, 132 and first, second and third reflective surfaces M1, M2, M3 are shown as plane windows and plane surfaces. In other solutions, any of the first and second windows 131, 132 and first, second and third reflective surfaces M1, M2, M3 could be configured as curved windows and/or curved reflective surfaces, i.e. as cylindrically curved and/or spherically curved. For example, curved surfaces may be used for beam shaping such as collimation.

A coating layer may be applied at any interface between any of the first and second windows 131, 132 and any of the first, second and third reflective surfaces M1, M2, M3. For example, the coating layer may comprise an anti-reflection coating, a filter coating such as wavelength dependent filter coatings or polarization dependent coatings. The coating layer, or a layer element, which may be arranged at said interface may comprises a grating element to provide diffraction effects.

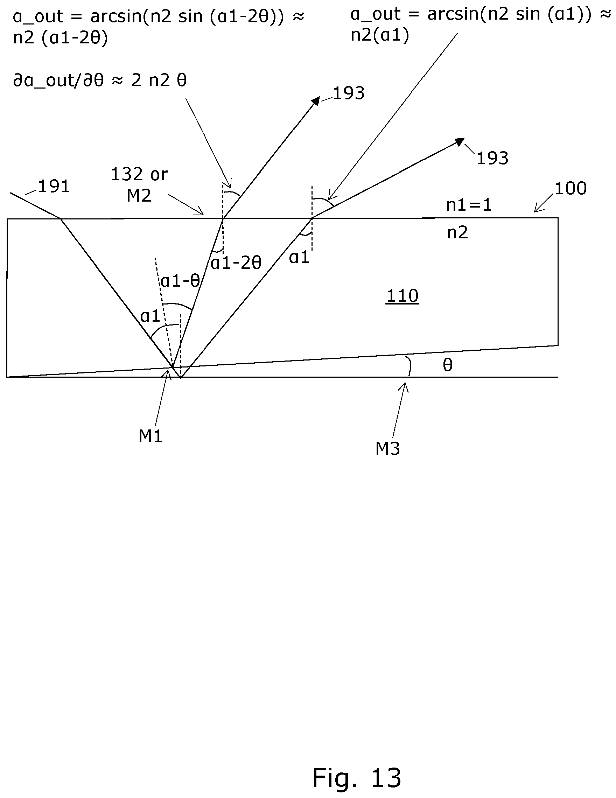

Fig. 13 illustrates a main principle not according to the invention. In the initial situation the first reflective surface M1 is not tilted, i.e. so that θ=0.

The incident light beam 191 has an angle of incidence of α1 and therefore refracted out the scanning device 100 with an output angle α_out = arcsin(n2 sin(α1)) or α_out = n2 a1 in a small angle approximation, where n2 is the refractive index of the non-fluid body 110 and it is assumed that the surroundings of the non-fluid body 110 has a refractive index n1=1.

In a situation where the first reflective surface M1 is tilted by an angle θ, the incident beam 191, is refracted out with an output angle α_out = arcsin(n2 sin(α1±2 θ)) or α_out = n2(α1±2 θ) in a small angle approximation. The sign of θ depends on the direction of change of the angle θ of the mirror M2.

The change of the angle of the scanning beam 193 relative to a change of the angle θ of the mirror M2, i.e. the angular amplification, ∂α_out/∂θ equals 2 n2 θ, in the small angle approximation.

Accordingly, with a refractive index of the non-fluid polymer of e.g. 1.5, the scanning angle of the scanning beam 193 becomes 3 times the angle variation of the first reflective surface M1.

If the scanning device 100 is configured with a third reflective surface M3, the angle of which is changed with the same angle θ, or a different angle, of the first reflective surface M1 and the scanning device 100 is arranged so that the incident beam 191 is reflected both by the first and third reflective surfaces M1, M3, the resulting change of the angle of the refracted scanning beam 193 becomes n 4 θ. Accordingly, with a refractive index of the non-fluid polymer of e.g. 1.5, the scanning angle of the scanning beam 193 becomes 6 times the angle variation θ of the first and second reflective surfaces M1, M2.

For larger angles of incidence, the angular amplification, ∂α_out/αθ, becomes non-linear but still provides a significant angular magnification which increases non-linearly for increasing angles of incidence. The non-linearity can be addressed by the control system arranged for controlling the actuator system 120, e.g. to provide a linear relationship between a control signal to the control system and the angular amplification.

As the angle of incidence at the second window 132 becomes larger the beam may be exposed to total internal reflection, i.e. when the angle of incidence becomes larger than the critical angle.

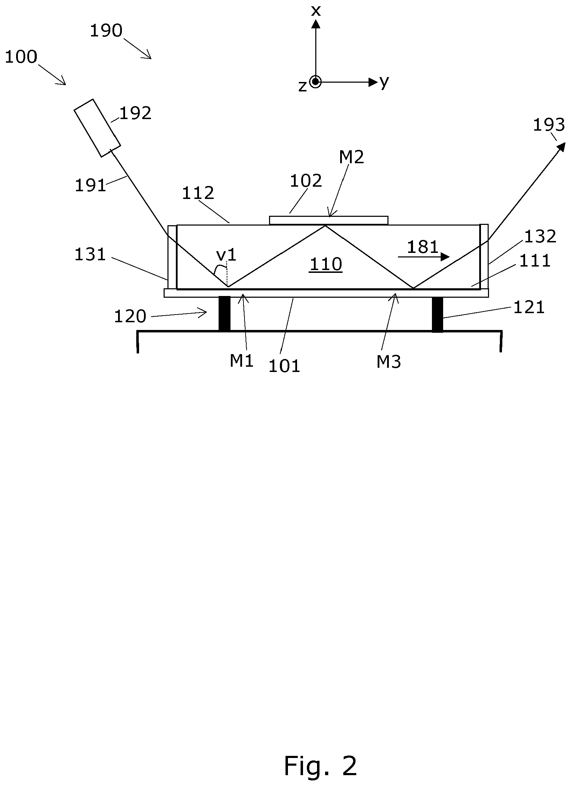

Fig. 2 shows an embodiment, wherein the first and second windows 131, 132 are arranged adjacent to opposite body surfaces of the non-fluid body, such as the side surfaces as illustrated. The side surfaces are non-parallel, such as perpendicular or substantially perpendicular, with the first and second body surfaces 111, 112 which are arranged opposite to the respective first and second reflective surfaces M1, M2.

The first and second windows 131, 132 are arranged adjacent to any of the side surfaces, first and second body surfaces 111, 112 or other surface of the non-fluid body 110 which could have other shapes than the regular hexahedron shapes. Thus, in general, the non-fluid body 100 could have the shape of a polyhedron or other 3 dimensional shape.

Fig. 3 illustrates an embodiment wherein the first and third reflective surfaces M1, M3 are be arranged on individual reflector structures 101a, 101b, respectively. The reflector structures 101a, 101b may be actuated independently by individually controllable actuators 121, to provide motion such as tilting of the reflective surfaces. In this way the angle of incidence v1, v3 at the first and third reflective surfaces M1, M3 may be controlled individually.

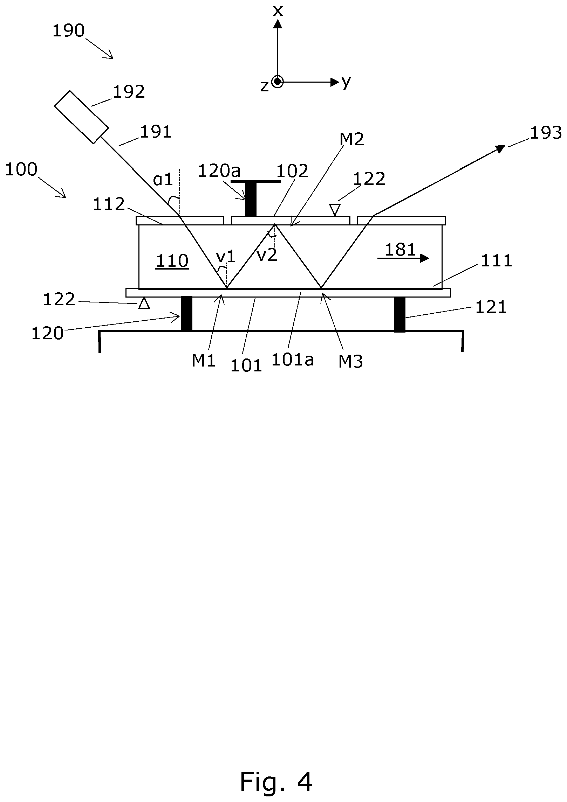

Fig. 4 shows an embodiment wherein the opto-mechanical scanning device comprises a second actuator system 120a comprising one or more actuators 121 arranged to move the second reflective surface M2 so that an angle of the second reflective surface M2 depends on the movement of the second reflective surface M2. In this way the angle of incidence v2 of the at the second reflective surface M2 can be adjusted, e.g. to further increase the scanning angle range of the scanning beam 193. The second reflector element 102 comprising the second reflector M2 may be hinged via a hinge function 122 as described for other embodiments.

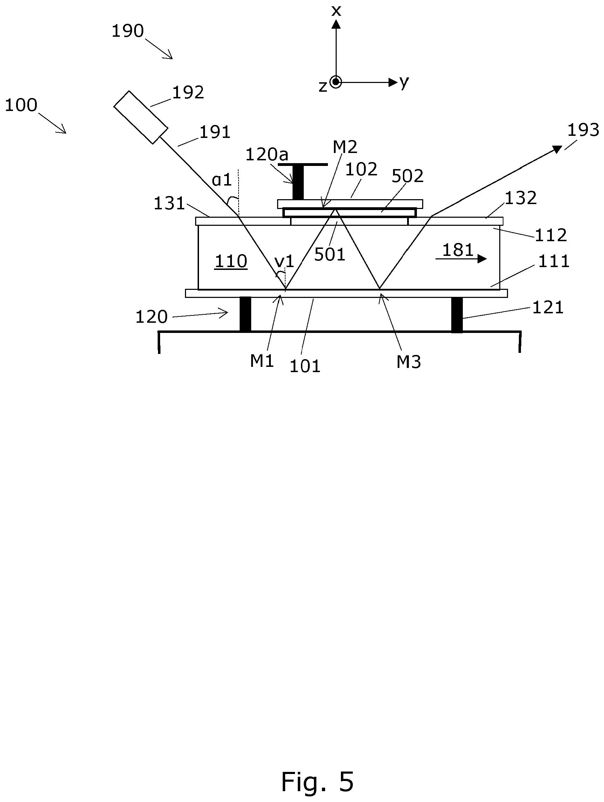

Fig. 5 shows an embodiment wherein the second reflective surface M2 being arranged on the reflector structure 102 is supported by a further transparent deformable, non-fluid body 502 which is located between the second reflective surface M2 and the transparent, deformable, non-fluid body 110. For example, the scanning device 100 may comprise a transparent element 501 arranged adjacent to the second body surface 112 with the further non-fluid body 502 arranged adjacent to the transparent element 501 and the second reflective surface M2. The transparent element 501 may be configured to include the first and second windows 131, 132.

This embodiment may further include the second actuator system 120a which is arranged to move the second reflective surface M2 by deformation of the further non-fluid body 502.

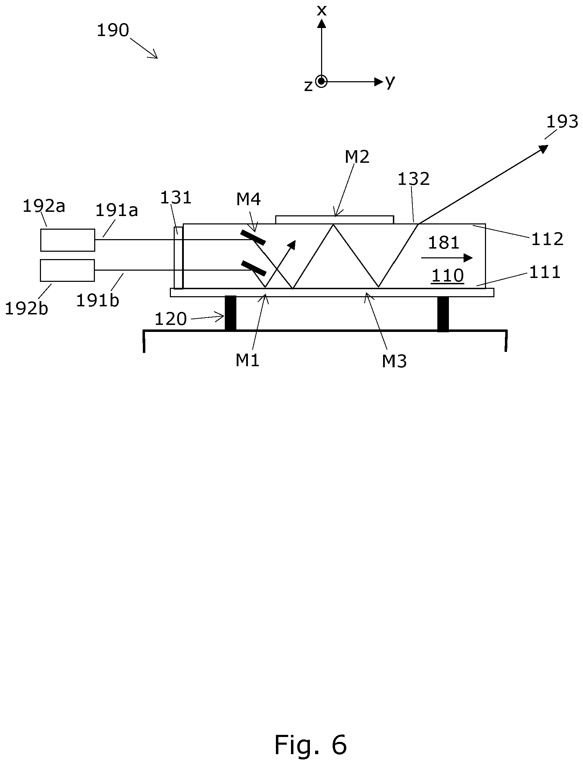

Fig. 6 shows an embodiment comprising an embedded reflective surface M4 which is embedded in the transparent, deformable, non-fluid body 110 and arranged to direct the incident light beam 191 towards the first reflective surface M1.

As illustrated in Fig. 6, the scanning device 100 may be configured with two or more reflective surfaces M4 and corresponding two or more light sources 192a, 192b arranged to inject corresponding two or more incident light beams 191a, 191b onto the reflective surfaces M4.

In this example, the first window 131 is arranged at a side surface while the second window 132 is arranged at the second body surface 112, although other arrangements are also feasible.

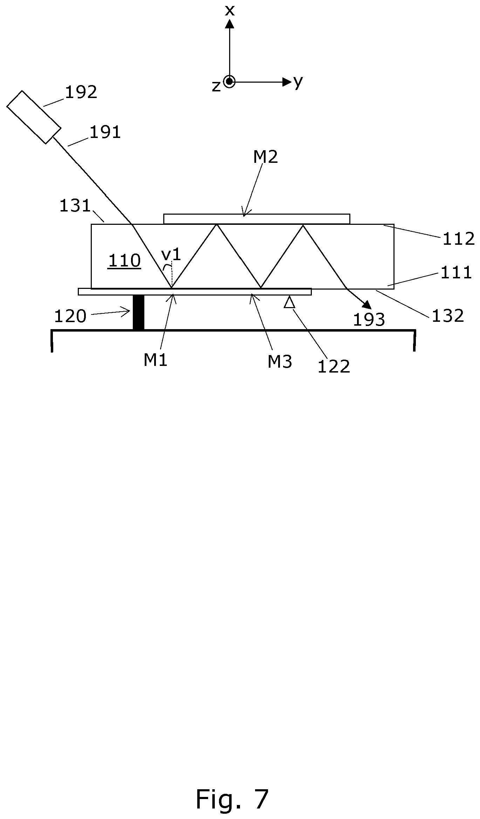

Fig. 7 shows an embodiment wherein the second reflective surface M2 is arranged to reflect the reflected beam 191 from the first reflective surface M1 and to reflect the reflected beam 191 from the third reflective surface M3 so that the scanning beam 193 is outputted via the second window 132 arranged at the first body surface 111, opposite to the second body surface 112 at which the first window 131 is arranged. According to this embodiment, the second reflective surface M2 is extended along the propagation direction 181 to provide reflection of the incident beam 191 two times.

The principle with the extended second reflective surface M2 may be applied to other embodiments and examples of the scanning device 100, e.g. for the purpose of outputting the scanning beam 193 through an output window 132 located opposite to the first window 131, with respect to the non-fluid body 110.

Any embodiment or example of the scanning device 100 may be configured in other ways such as mirroring the scanning device 100 in the yz plane, e.g. so that the incident beam 191 is injected from the bottom, by mirroring the scanning device in the xz plane so that the incident beam 191 is injected from the right.

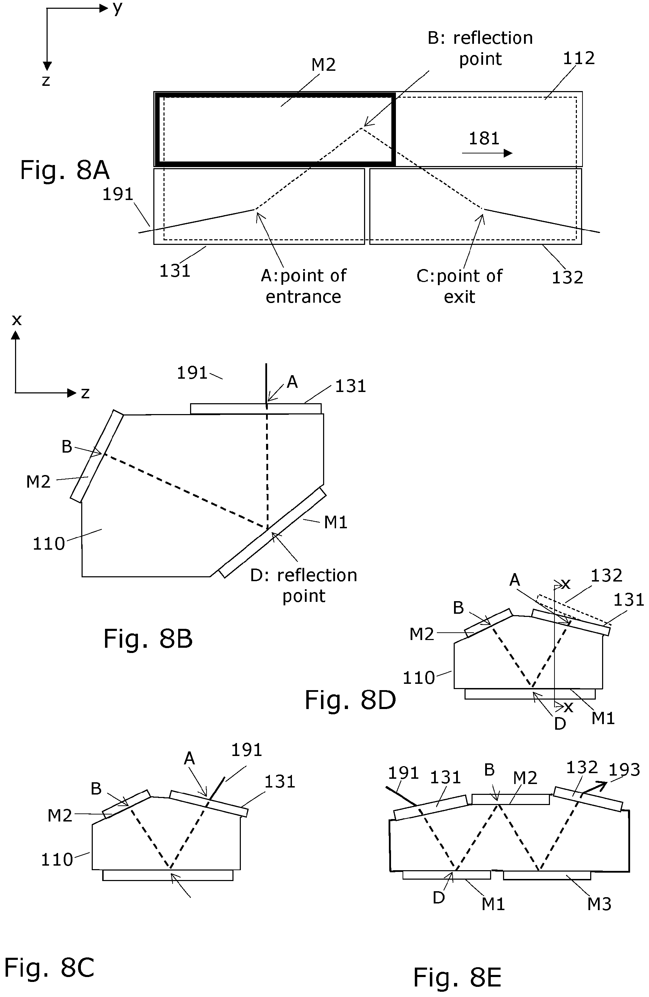

Figs. 8A-8C illustrates an embodiment of the scanning device 100. Fig. 8A shows a top view in the yz plane and Figs. 8B-8C, shows side views in the xz plane of two different configurations of the scanning device 100.

The scanning device 100 in Figs. 8A-8C is configured so that the second body surface 112 is divided along an extension of the propagation direction 181 so that the second reflection surface M2 is located on one side of the division and the first window 131 and/or the second window 132 is located on the other side of the division. In this way, the second reflection surface M2 extends side-by-side, i.e. opposite, to the first window 131 and/or the second window 132 over at least a portion of the extension of the second reflection surface M2 along the propagation direction 181 or the y-axis.

Advantageously, the extended length of the second reflective surface M2 increases the range of angles of incidence v1 at the first reflective surface M1, while not limiting the extension of the first window 131. That is, a too short length of the first window 131 along the propagation direction 181 may lead to cropping of the incident beam 191.

In one embodiment, the second reflection surface M2 is arranged so that it extends from one end of the second body surface 112 to a location between the ends of the body surface, i.e. the ends which are perpendicular or substantially perpendicular with the propagation direction 181, so that the second window 132 extends across said division, at least along a fraction of the extension of the second window 132 along the propagation direction 181. Advantageously, according to this embodiment, the wider second window 132 improves the angular scanning range in both the y and z directions of the scanning beam 193.

Due to the division, the incident beam 191 needs to be directed also in a direction perpendicular to the propagation direction 181 in order to propagate from the first window to the second reflection surface M2. This redirection of the incident beam 191 may be achieved by tilting the first reflection surface M1 (Fig. 8B) so that the incident beam transmitted via the entrance point A, is reflected at reflection point D on M1 so that the beam propagates along the propagation direction 181 and towards the second reflection surface M2, where the beam is reflected at reflection point B towards the second window 132 which may be located in extension of the first window 131 along the propagation direction 181.

Equivalently, the incident beam 191 may be angled towards the second reflective surface M2, so that the reflected beam from reflection point D propagates towards the second reflective surface M2 as illustrated in Fig. 8C. In this example, the first and second windows 131, 132 may be tilted about the y-axis, e.g. so that the first and second windows forms a plane entrance surface which is perpendicular to the incident light beam 191, or so that the angle of incidence relative to the first window is in the range from 0 to 30 degrees.

Fig. 8D is equivalent to Fig. 8C, with the difference that the second window 132 is tilted about the y-axis with an angle which is different, here larger, than the tilting angle of the first window 131.

Fig. 8E shows a cross-sectional view XX (see cross-section in Fig. 8D) in an xy-plane. This example shows that the first and/or second window 131, 132 may additionally or alternatively be tilted about the z-axis, e.g. so that the first window 131 is rotated counter-clockwise, while the second window is rotated clockwise, e.g. with the same or different angles.

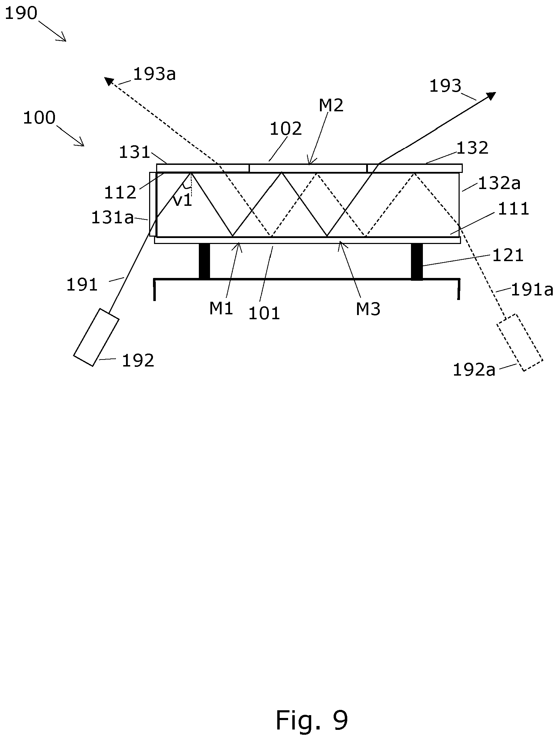

Fig. 9 illustrates an embodiment of the scanning device 100 configured to receive at least first and second incident beams 191, 191a and to output at least first and second scanning beams 193, 193a. For that purpose, the first window 131 comprises as a polarizing or wavelength-selective folding mirror arranged to reflect the first incident beam 191 into the non-fluid body 110 and to transmit the second scanning beam 193a out of the non-fluid body. The second window 132 similarly comprises a polarizing or wavelength-selective folding mirror arranged to reflect the second incident beam 191a into the non-fluid body 110 and to transmit the first scanning beam 193 out of the non-fluid body.

According to this embodiment, the first window 131 further comprises a portion 131a which does not comprise the polarizing or wavelength-selective folding mirror for enabling injection of the first incident light beam 191, and the second window 132 further comprises a portion 132a which does not comprise the polarizing or wavelength-selective folding mirror for enabling injection of the second incident light beam 191a.

Alternatively, the portions 131a, 132a may constitute the first and second windows for receiving and transmitting the first and second incident light beams into the non-fluid body, whereas the polarizing or wavelength-selective folding mirror portions 131, 132 constitute the first and second windows for receiving and transmitting the first and second incident light beam out of the non-fluid body.

For example, the first incident beam 191 may be p-polarized, the second incident beam 191a may be s-polarized, the first window 131 may be configured with a polarization dependent mirror arranged to reflect p-polarized light and transmit s-polarized light, and the second window 132 may be configured with a polarization dependent mirror arranged to reflect s-polarized light and transmit p-polarized light.

Alternatively, or additionally, the first and second incident beams 191,191a may have different non-overlapping wavelength ranges, and the first and second windows 131, 132 may be configured with corresponding different wavelength ranges to reflect light with the different wavelengths of the incident beams 191, 191a and transmit light with the different wavelengths of the scanning beams 193, 193a.

An application which could utilize the light beams with different non-overlapping wavelength ranges could be a LIDAR where the first and second incident beams 191, 191a have wavelength of 1064 nm and 532 nm, respectively.

Accordingly, the light beam scanner according 190 comprises at least first and second light devices 192, 192a arranged to generate the at least first and second incident beams 191, 191a.

The generation of first and second scanning beams 193, 193a may be used for high resolution projection, where the first scanning beam scans a first surface such as the left portion of a screen and the second scanning beam scans a second surface such as the right portion of the screen.

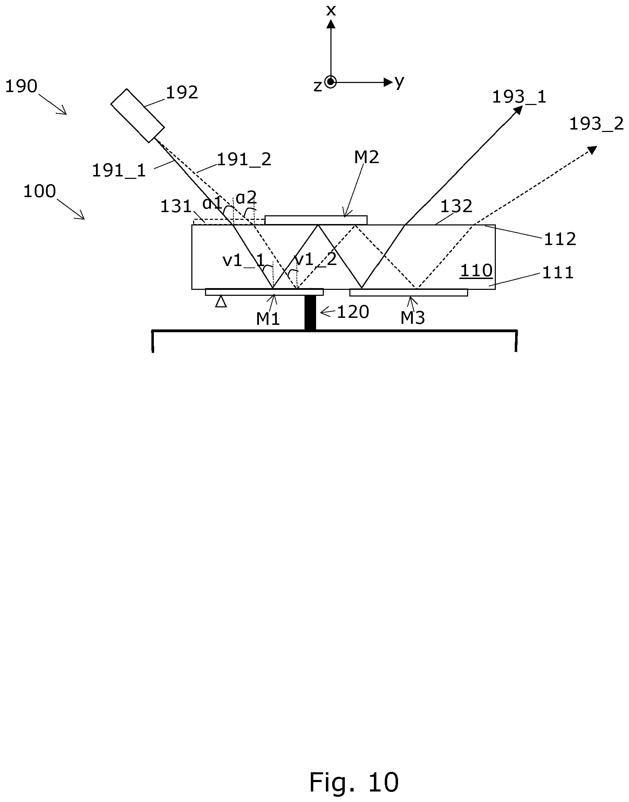

Fig. 10 illustrates an embodiment of the scanning device 100 wherein the at least one incident light beam 191 comprises first and second incident light beams 191_1, 191_2 which impinges the first window 131 with different angles of incidence 1α, α2 relative to the second body surface 112, e.g. angles of incidence α1, α2 in the xy plane. Accordingly, the angles of incidence v1_1, v1_2 at the first reflective surface M1 and consequently, the angles of the first and second scanning beams 193_1, 193_2 will be different.

Alternatively, the first and second incident light beams 191_1, 191_2 may be collinear or parallel, but have different non-overlapping wavelength ranges, so wavelength so that the input beam is refracted to different angles v1_1, v1_2 according to the different wavelengths. It is also possible to have incident light beams 191_1, 191_2 which both differ by different wavelengths and different angles of incidence α1, α2.

Alternatively or in addition to the above-mentioned configurations, the first window 131 may be configured as a grating arranged to diffract the first and second incident light beams 191_1, 191_2 with different non-overlapping wavelength ranges into different angles of incidence α1, α2.

Thus, the light device 192 of the light beam scanner 190 may comprise two or more light sources arranged to generate the two or more incident light beams having different angles of incidence α1, α2 and/or different non-overlapping wavelength ranges.

By utilizing incident beams 191_1, 191_2 having different angles of incidence α1, α2 the angular scanning range of the scanning beams 193_1, 193_2 can be increased. That is, as an illustrative example, the first scanning beam 193_1 may cover a range from 10 to 30 degrees, while the second scanning beam 193 may cover a range from 30 to 50 degrees.

By controlling the light sources responsible for generating the at least first and second incident beams 191_1, 191_2, such as controlling the timing of when the beams are generated, so that only one of the beams is being generated at any time, it is possible to achieve a solution where only one scanning beam 193 is outputted at any time. In this way, the scanning device 100 behaves as a single output scanning device with an extended angular scanning range.

The light beam scanner 190 may comprise a controller (not shown) arranged to sequentially power the two or more light sources, or otherwise sequentially generate first and second incident beams 191_1, 191_2. For example, the control may be performed dependent on an obtained tilt parameter relating to the angle of at least one of the first reflective surface M1 and/or the second and/or the third reflective surfaces M2, M3. Embodiments where the reflective surfaces M2 and/or M3 are used alternatively or additionally to the first reflective surface M1 to alter the scanning angles of the scanning beams 193_1, 193_2 are not illustrated for convenience.

The tilt parameter thus relates to the angle of incidence v1_1, v1_2, v2, v3 and may be based on measurements of the motion of the reflective surfaces M1, M2, M3, obtained control or power signals used for controlling the actuator system 120 or other relevant signals.

For example, the controller may be arrange to power a first of the two or more light sources when the tilt parameter is within a first range and to power a second of the two or more light sources when the tilt parameter is within a second range.

The first and second range may overlap so that the shift from the first to the second incident beam occurs smoothly.

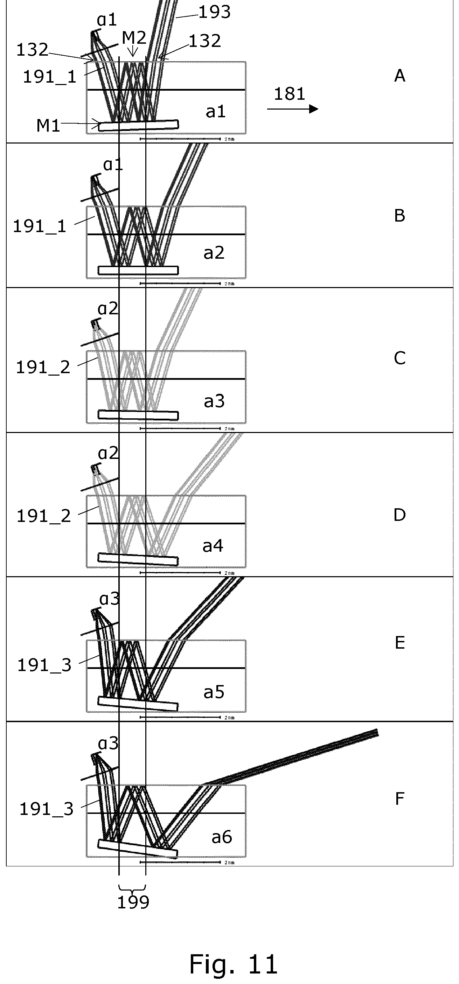

Fig. 11 shows a ray tracing result with first, second and third incident light beams 191_1, 191_2, 191_3, having different angles of incidence, corresponding to Fig. 10.

Thus, fig. 11 illustrates a solution where the incident light beam 191 comprises first, second and third incident light beams 191_1, 191_2, 191_3 which are incident with angles α1, α2 and α3, respectively, with α1>α2>α3. The two upper illustrations show a situation where the first light beam 191_1 is generated, while the other two beams or not generated. Similarly, the two middle illustrations show a situation where the second light beam 191_2 is generated, and the two lower illustrations show a situation where the third light beam 191_3 is generated.

The incident light beam 191 is reflected by the first reflective surface M1 which tilted with different angles a1-a6 with a1<a3<a5 and a2<a4<a6.

The two lines 199 indicate an extension of the second reflective surface M2 along the propagation direction 181.

Illustration A, shows a situation where the scanning beam 193 is at its leftmost position and therefore defines the leftmost extension of the second window 132 and the rightmost extension of the boundary of M2.

In illustration B, the first reflective surface M1 has been tilted as much clockwise as possible, without causing cropping of the beam, i.e. a further clockwise tilt would move the beam outside the boundary of M2.

Illustration D, shows that the angle of incidence α2 generates the rightmost displacement of the beam before moving a portion of the beam to the right of the boundary of M2. The larger tilting of the M1 mirror generates a larger angle of the scanning beam 193, even with a1>a2.

Illustration E, shows a situation where the incident beam 191_3 impinges the M2 mirror at its leftmost position and therefore defines the leftmost extension of the M2 mirror the rightmost extension of the first window 131.

Illustration E, shows a situation where the incident beam 191_3 impinges the M2 mirror at its rightmost position with the largest M1 tilt at a6 and therefore generates the largest angle of the scanning beam 193.

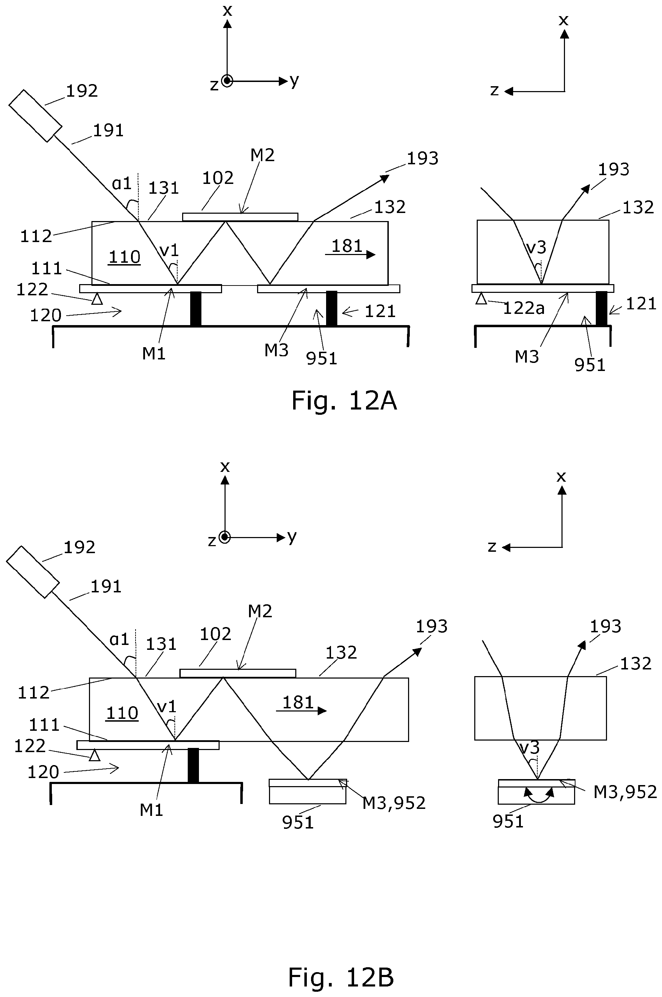

Figs. 12A-12B show embodiments of the opto-mechanical scanning device 100 configured with a further actuator system 951 arranged to move the third reflective surface M3 or other reflective surface 952 so that an angle of the third reflective surface M3 or the other reflective surface 952 is adjustable to deflect the incident beam in a direction out of the plane of incidence, such as perpendicular to the plane of incidence.

Fig. 12A shows that the further actuator system 951 may be configured with the actuator 121 of the actuator system 120, but arranged so that the third reflective surface M3 is rotated about a further hinge 122a which defines a hinge line extending along the z axis (illustration to the right), perpendicular to the plane of incidence of the incident beam 191, or at least in a direction which is different from the hinge line defined by the hinge 122 of e.g. the first reflective surface M1. Accordingly, by oscillating the third reflective surface M3 about the further hinge 122a, the angle of incidence v3 in the xz plane can be varied simultaneously with the angel of incidence of the first reflective surface M1 so that the scanning beam 193 can be scanned in 2 dimensions, e.g. so as to scan an area.

In this context, the plane of incidence is the plane defined by the incident ray and the normal to the first reflective surface M1, or equivalently the plane defined by the incident ray and the normal to the first window 131.

Fig. 12B shows another configuration of the scanning device 100 where the further actuator system 951 is configured so that the third reflective surface M3 or other reflective surface 952 is separated from the non-fluid body 110. The volume between the third reflective surface M3 or the other reflective surface 952 may comprise air, an additional non-fluid body, or other material. As illustrated to the right in Fig. 12B, the actuator system 951 is arranged to rotate about the z-axis so that the scanning beam 193 can be scanned in a direction out of the plane of incidence.

The further actuator system 951 may be operated with an oscillation frequency which is different from the oscillation frequency of the actuator system 120 of e.g. the first reflective surface M1. For example, the further actuator system 951 may be a resonant scanner such as vacuum resonant scanner.

## Claims

1. An opto-mechanical scanning device (100) arranged for deflecting at least one incident light beam (191), comprising
- a first reflective surface (M1),
- a second reflective surface (M2),
- a transparent, deformable, non-fluid body (110) comprising a first body surface (111) arranged in contact with the first reflective surface (M1) or arranged with an intermediate layer between the first body surface (111) and the first reflective surface (M1) wherein the intermediate layer connects the non-fluid body (110) with the first reflective surface (M1), and an opposite second body surface (112) arranged in contact with the second reflective surface (M2) or arranged with an intermediate layer between the second body surface (112) and the second reflective surface (M2) wherein the intermediate layer connects the non-fluid body (110) with the second reflective surface (M2), wherein the refractive index of the non-fluid body is greater than the refractive index of air being 1,
- an actuator system (120) comprising one or more actuators (121) arranged to move the first reflective surface (M1) so that an angle (θ) of the first reflective surface (M1) is adjustable, wherein the adjustable angle (θ) provides an adjustable angle of incidence at the first reflective surface,
- a first window (131) arranged to receive and transmit the at least one incident light beam into the non-fluid body,
- a second window (132) arranged to receive and refract the at least one incident light beam out of the non-fluid body, where the first window and the second window are arranged adjacent to one or more surfaces of the non-fluid body with the second reflective surface (M2) arranged so that, during operation of the opto-mechanical scanning device, the incident light beam is transmitted out of the non-fluid body after being reflected successively by the first reflective surface (M1) and afterwards by the second reflective surface (M2) so that the angular amplification of the angle of the said incident light beam being transmitted out of the non-fluid body relative to the angular variations of the first reflective surface is amplified proportionally with the refractive index of the non-fluid body, at least in a small angle approximation.

2. An opto-mechanical scanning device (100) according to claim 1, comprising
- a third reflective surface (M3), wherein
- the first body surface (111) is arranged in contact with the first and third reflective surfaces (M1,M3) or arranged with an intermediate layer between the first body surface (112) and the first and third reflective surfaces (M1, M3), and
- the actuator system (120) is arranged to move the first and third reflective surfaces (M1, M3) so that an angle of the first and third reflective surfaces (M1, M3) is adjustable.

3. An opto-mechanical scanning device according to any of the preceding claims, wherein the first window (131), the second window (132) and the second reflective surface (M2) are embodied by separate, non-contacting elements.

4. An opto-mechanical scanning device according to any of the preceding claims, wherein the second reflective surface (M2) and the first window (131) extend side-by-side over at least a portion of the second body surface (112) along a propagation direction (181) of the incident light beam (191).

5. An opto-mechanical scanning device according to any of the preceding claims, further comprising an embedded reflective surface (M4) being embedded in the transparent, deformable, non-fluid body (110) and arranged to direct the incident light beam (191) towards the first reflective surface (M1).

6. An opto-mechanical scanning device according to any of the preceding claims, wherein the opto-mechanical scanning device (100) comprises a second actuator system (120a) comprising one or more actuators (121) arranged to move the second reflective surface (M2) so that an angle of the second reflective surface (M2) is adjustable.

7. An opto-mechanical scanning device according to any of the preceding claims, wherein the second reflective surface (M2) is supported by a further transparent, deformable, non-fluid body (502), located between the second reflective surface (M2) and the transparent, deformable, non-fluid body (110).

8. An opto-mechanical scanning device according to claim 2, wherein the actuator system (120) is arranged to move the first and third reflective surfaces (M1, M3) independently of each other so that the angles of the first reflective surface (M1) and the third surface (M3) can be adjusted independently of each other.

9. An opto-mechanical scanning device according to any of claims 2 and 8, comprising a third actuator system (951) arranged to move the third reflective surface (M3) or other reflective surface (952) comprised by the opto-mechanical scanning device so that a further angle of the third reflective surface (M3) or the other reflective surface (952) is adjustable to deflect the incident beam in a direction out of a plane of incidence of the incident beam (191), such as perpendicular to the plane of incidence, wherein the plane of incidence is defined relative to the first reflection surface.

10. An opto-mechanical scanning device according to any of claims 2 and 8-9, wherein, the second window (132) is further arranged to reflect a second incident light beam (191a) of the at least one incident light beams towards the third reflective surface (M3), and the first window (131) is further arranged to receive and transmit the second incident light beam (191a) out of the non-fluid body.

11. An opto-mechanical scanning device according to any of the preceding claims, wherein an optical property such as the refractive index or an Abbe number of the non-fluid body and/or any of the first and second windows (131, 132) is different at at least two locations of the non-fluid body and/or of any of the first and second windows (131, 132), such as wherein the optical property varies gradually dependent on the location along a given direction.

12. A light beam scanner (190), comprising the opto-mechanical scanning device (100) according to any of claims 1-11 and a light device (192).

13. A light beam scanner according to claim 12, wherein the light device comprises two or more light sources arranged to generate two or more incident light beams having different angles of incidence (α1, α2) and/or different non-overlapping wavelength ranges.

14. A light beam scanner according to claim 13, wherein the light beam scanner further comprises a controller arranged to sequentially power the two or more light sources dependent on an obtained tilt parameter relating to the angle of the first reflective surface (M1).

15. A light beam scanner according to any of claims 13-14, wherein the controller is arranged to power a first of the two or more light sources when the tilt parameter is within a first range and to power a second of the two or more light sources when the tilt parameter is within a second range which is different from the first range.

16. A light beam scanner according to any of claims 12-15, comprising first and second light devices (192, 192a), where the first light device is arranged to inject one or more light beams into the first window and the second light device is arranged to inject one or more light beams into the second window.

17. A method for manufacturing an opto-mechanical scanning device according to any of claims 1-11, said method comprising
- providing a first reflective surface (M1),
- providing a second reflective surface (M2),
- providing a transparent, deformable, non-fluid body (110) comprising a first body surface (111) arranged in contact with the first reflective surface (M1) or arranged with an intermediate layer between the first body surface (111) and the first reflective surface (M1) wherein the intermediate layer connects the non-fluid body (110) with the first reflective surface (M1), and an opposite second body surface (112) arranged in contact with secondt reflective surface (M2) or arranged with an intermediate layer between the second body surface (112) and the second reflective surface (M2) wherein the intermediate layer connects the non-fluid body (110) with the second reflective surface (M2), wherein the refractive index of the non-fluid body is greater than the refractive index of air being 1,
- providing an actuator system (120) comprising one or more actuators (121) arranged to move the first reflective surface (M1) so that an angle (θ) of the first reflective surface (M1) is adjustable, wherein the adjustable angle (θ) provides an adjustable angle of incidence at the first reflective surface,
- providing a first window (131) arranged to receive and transmit the at least one incident light beam into the non-fluid body,
- providing a second window (132) arranged to receive and refract the at least one incident light beam out of the non-fluid body, where the first window and the second window are arranged adjacent to one or more surfaces of the non-fluid body with the second reflective surface (M2) arranged so that, during operation of the opto-mechanical scanning device, the incident light beam is transmitted out of the non-fluid body after being reflected successively by the first reflective surface (M1) and afterwards by the second reflective surface (M2) so that the angular amplification of the angle of the said incident light beam being transmitted out of the non-fluid body relative to the angular variations of the first reflective surface is amplified proportionally with the refractive index of the non-fluid body, at least in a small angle approximation.

18. An electronic device comprising a light beam scanner according to any of claims 12-16, wherein the electronic device is anyone of:
- a camera module,
- a portable computer device such as a smartphone, a watch, a tablet,
- a camera,
- a pair of spectacles,
- a measurement device arranged for scanning distances,
- an image projector arranged for creating an image by scanning light beams,
- another electronic device.

19. Use of a light beam scanner according to any of claims 12-16 for scanning and projecting the scanning beam.

## Patentansprüche

1. Optomechanische Abtastvorrichtung (100), angeordnet zum Ablenken mindestens eines einfallenden Lichtstrahls (191), umfassend
- eine erste reflektierende Oberfläche (M1),
- eine zweite reflektierende Oberfläche (M2),
- einen transparenten, verformbaren, nichtfluiden Körper (110), umfassend eine erste Körperoberfläche (111), angeordnet in Kontakt mit der ersten reflektierenden Oberfläche (M1) oder angeordnet mit einer Zwischenschicht zwischen der ersten Körperoberfläche (111) und der ersten reflektierenden Oberfläche (M1), wobei die Zwischenschicht den nichtfluiden Körper (110) mit der ersten reflektierenden Oberfläche (M1) verbindet, und eine gegenüberliegende zweite Körperoberfläche (112), angeordnet in Kontakt mit der zweiten reflektierenden Oberfläche (M2) oder angeordnet mit einer Zwischenschicht zwischen der zweiten Körperoberfläche (112) und der zweiten reflektierenden Oberfläche (M2), wobei die Zwischenschicht den nichtfluiden Körper (110) mit der zweiten reflektierenden Oberfläche (M2) verbindet, wobei der Brechungsindex des nichtfluiden Körpers größer ist als der Brechungsindex von Luft, der 1 ist,
- ein Aktuatorsystem (120), umfassend einen oder mehrere Aktuatoren (121), angeordnet, um die erste reflektierende Oberfläche (M1) zu bewegen, sodass ein Winkel (θ) der ersten reflektierenden Oberfläche (M1) anpassbar ist, wobei der anpassbare Winkel (θ) einen anpassbaren Einfallswinkel an der ersten reflektierenden Oberfläche bereitstellt,
- ein erstes Fenster (131), angeordnet, um den mindestens einen einfallenden Lichtstrahl zu empfangen und in den nichtfluiden Körper zu übertragen,
- ein zweites Fenster (132), angeordnet, um den mindestens einen einfallenden Lichtstrahl zu empfangen und aus dem nichtfluiden Körper herauszubrechen, wobei das erste Fenster und das zweite Fenster angrenzend zu einer oder mehreren Oberflächen des nichtfluiden Körpers angeordnet sind, mit der zweiten reflektierenden Oberfläche (M2) so angeordnet, dass während des Betriebs der optomechanischen Abtastvorrichtung der einfallende Lichtstrahl aus dem nichtfluiden Körper heraus übertragen wird, nachdem er nacheinander von der ersten reflektierenden Oberfläche (M1) und anschließend von der zweiten reflektierenden Oberfläche (M2) reflektiert wurde, sodass die Winkelverstärkung des Winkels des aus dem nichtfluiden Körper heraus übertragenen einfallenden Lichtstrahls relativ zu den Winkelvariationen der ersten reflektierenden Oberfläche mindestens in einer Kleinwinkelnäherung proportional zum Brechungsindex des nichtfluiden Körpers verstärkt wird.

2. Optomechanische Abtastvorrichtung (100) nach Anspruch 1, umfassend
- eine dritte reflektierende Oberfläche (M3), wobei
- die erste Körperoberfläche (111) in Kontakt mit der ersten und der dritten reflektierenden Oberfläche (M1, M3) angeordnet ist oder mit einer Zwischenschicht zwischen der ersten Körperoberfläche (112) und der ersten sowie der dritten reflektierenden Oberfläche (M1, M3) angeordnet ist, und
- das Aktuatorsystem (120) angeordnet ist, um die erste und die dritte reflektierende Oberfläche (M1, M3) zu bewegen, sodass ein Winkel der ersten und der dritten reflektierenden Oberfläche (M1, M3) anpassbar ist.

3. Optomechanische Abtastvorrichtung nach einem der vorstehenden Ansprüche, wobei das erste Fenster (131), das zweite Fenster (132) und die zweite reflektierende Oberfläche (M2) durch separate, berührungsfreie Elemente verkörpert werden.

4. Optomechanische Abtastvorrichtung nach einem der vorstehenden Ansprüche, wobei sich die zweite reflektierende Oberfläche (M2) und das erste Fenster (131) nebeneinander über mindestens einen Abschnitt der zweiten Körperoberfläche (112) entlang einer Ausbreitungsrichtung (181) des einfallenden Lichtstrahls (191) erstrecken.

5. Optomechanische Abtastvorrichtung nach einem der vorstehenden Ansprüche, weiter umfassend eine eingebettete reflektierende Oberfläche (M4), die in den transparenten, verformbaren, nichtfluiden Körper (110) eingebettet und angeordnet ist, um den einfallenden Lichtstrahl (191) in Richtung der ersten reflektierenden Oberfläche (M1) zu richten.

6. Optomechanische Abtastvorrichtung nach einem der vorstehenden Ansprüche, wobei die optomechanische Abtastvorrichtung (100) ein zweites Aktuatorsystem (120a) umfasst, umfassend einen oder mehrere Aktuatoren (121), angeordnet, um die zweite reflektierende Oberfläche (M2) so zu bewegen, dass ein Winkel der zweiten reflektierenden Oberfläche (M2) anpassbar ist.

7. Optomechanische Abtastvorrichtung nach einem der vorstehenden Ansprüche, wobei die zweite reflektierende Oberfläche (M2) von einem weiteren transparenten, verformbaren, nichtfluiden Körper (502), lokalisiert zwischen der zweiten reflektierenden Oberfläche (M2) und dem transparenten, verformbaren, nichtfluiden Körper (110), getragen wird.

8. Optomechanische Abtastvorrichtung nach Anspruch 2, wobei das Aktuatorsystem (120) angeordnet ist, um die erste und die dritte reflektierende Oberfläche (M1, M3) unabhängig voneinander zu bewegen, sodass die Winkel der ersten reflektierenden Oberfläche (M1) und der dritten Oberfläche (M3) unabhängig voneinander angepasst werden können.

9. Optomechanische Abtastvorrichtung nach einem der Ansprüche 2 und 8, umfassend ein drittes Aktuatorsystem (951), angeordnet, um die dritte reflektierende Oberfläche (M3) oder eine weitere reflektierende Oberfläche (952), die von der optomechanischen Abtastvorrichtung umfasst wird, so zu bewegen, dass ein weiterer Winkel der dritten reflektierenden Oberfläche (M3) oder der weiteren reflektierenden Oberfläche (952) anpassbar ist, um den einfallenden Strahl in eine Richtung aus einer Einfallsebene des einfallenden Strahls (191) heraus abzulenken, wie senkrecht zur Einfallsebene, wobei die Einfallsebene relativ zur ersten Reflexionsoberfläche definiert ist.

10. Optomechanische Abtastvorrichtung nach einem der Ansprüche 2 und 8-9, wobei das zweite Fenster (132) weiter angeordnet ist, um einen zweiten einfallenden Lichtstrahl (191a) der mindestens einen einfallenden Lichtstrahlen in Richtung der dritten reflektierenden Oberfläche (M3) zu reflektieren, und das erste Fenster (131) weiter angeordnet ist, um den zweiten einfallenden Lichtstrahl (191a) zu empfangen und aus dem nichtfluiden Körper heraus zu übertragen.

11. Optomechanische Abtastvorrichtung nach einem der vorstehenden Ansprüche, wobei eine optische Eigenschaft, wie der Brechungsindex oder die Abbe-Zahl des nichtfluiden Körpers und/oder eines der ersten und zweiten Fenster (131, 132), an mindestens zwei Stellen des nichtfluiden Körpers und/oder eines der ersten und zweiten Fenster (131, 132) unterschiedlich ist, wie wobei die optische Eigenschaft abhängig von der Stelle entlang einer gegebenen Richtung graduell variiert.

12. Lichtstrahlabtaster (190), umfassend die optomechanische Abtastvorrichtung (100) nach einem der Ansprüche 1-11 und eine Lichtvorrichtung (192).

13. Lichtstrahlabtaster nach Anspruch 12, wobei die Lichtvorrichtung zwei oder mehr Lichtquellen umfasst, angeordnet, um zwei oder mehr einfallende Lichtstrahlen zu erzeugen, die unterschiedliche Einfallswinkel (α1, α2) und/oder unterschiedliche, nicht überlappende Wellenlängenbereiche aufweisen.

14. Lichtstrahlabtaster nach Anspruch 13, wobei der Lichtstrahlabtaster weiter eine Steuereinheit umfasst, angeordnet, um die zwei oder mehr Lichtquellen abhängig von einem erhaltenen Neigungsparameter, der sich auf den Winkel der ersten reflektierenden Oberfläche (M1) bezieht, nacheinander mit Leistung zu versorgen.

15. Lichtstrahlabtaster nach einem der Ansprüche 13-14, wobei die Steuereinheit angeordnet ist, um eine erste der zwei oder mehr Lichtquellen mit Leistung zu versorgen, wenn der Neigungsparameter innerhalb eines ersten Bereichs ist, und um eine zweite der zwei oder mehr Lichtquellen mit Leistung zu versorgen, wenn der Neigungsparameter innerhalb eines zweiten Bereichs ist, der sich vom ersten Bereich unterscheidet.

16. Lichtstrahlabtaster nach einem der Ansprüche 12-15, umfassend eine erste und eine zweite Lichtvorrichtung (192, 192a), wobei die erste Lichtvorrichtung angeordnet ist, um einen oder mehrere Lichtstrahlen in das erste Fenster zu injizieren, und die zweite Lichtvorrichtung angeordnet ist, um einen oder mehrere Lichtstrahlen in das zweite Fenster zu injizieren.

17. Verfahren zum Herstellen einer optomechanischen Abtastvorrichtung nach einem der Ansprüche 1-11, wobei das Verfahren Folgendes umfasst
- Bereitstellen einer ersten reflektierenden Oberfläche (M1),
- Bereitstellen einer zweiten reflektierenden Oberfläche (M2),
- Bereitstellen eines transparenten, verformbaren, nichtfluiden Körpers (110), umfassend eine erste Körperoberfläche (111), angeordnet in Kontakt mit der ersten reflektierenden Oberfläche (M1) oder angeordnet mit einer Zwischenschicht zwischen der ersten Körperoberfläche (111) und der ersten reflektierenden Oberfläche (M1), wobei die Zwischenschicht den nichtfluiden Körper (110) mit der ersten reflektierenden Oberfläche (M1) verbindet, und eine gegenüberliegende zweite Körperoberfläche (112) angeordnet in Kontakt mit der zweiten reflektierenden Oberfläche (M2) oder angeordnet mit einer Zwischenschicht zwischen der zweiten Körperoberfläche (112) und der zweiten reflektierenden Oberfläche (M2), wobei die Zwischenschicht den nichtfluiden Körper (110) mit der zweiten reflektierenden Oberfläche (M2) verbindet, wobei der Brechungsindex des nichtfluiden Körpers größer ist als der Brechungsindex von Luft, der 1 ist,
- Bereitstellen eines Aktuatorsystems (120), umfassend einen oder mehrere Aktuatoren (121), angeordnet, um die erste reflektierende Oberfläche (M1) zu bewegen, sodass ein Winkel (θ) der ersten reflektierenden Oberfläche (M1) anpassbar ist, wobei der anpassbare Winkel (θ) einen anpassbaren Einfallswinkel an der ersten reflektierenden Oberfläche bereitstellt,
- Bereitstellen eines ersten Fensters (131), angeordnet, um den mindestens einen einfallenden Lichtstrahl zu empfangen und in den nichtfluiden Körper zu übertragen,
- Bereitstellen eines zweiten Fensters (132), angeordnet, um den mindestens einen einfallenden Lichtstrahl zu empfangen und aus dem nichtfluiden Körper herauszubrechen, wobei das erste Fenster und das zweite Fenster angrenzend zu einer oder mehreren Oberflächen des nichtfluiden Körpers angeordnet sind, mit der zweiten reflektierenden Oberfläche (M2) so angeordnet, dass, während des Betriebs der optomechanischen Abtastvorrichtung der einfallende Lichtstrahl aus dem nichtfluiden Körper heraus übertragen wird, nachdem er von der ersten reflektierenden Oberfläche (M1) aufeinanderfolgend und anschließend von der zweiten reflektierenden Oberfläche (M2) reflektiert wurde, sodass die Winkelverstärkung des Winkels des einfallenden Lichtstrahls, der aus dem nichtfluiden Körper heraus übertragen wird, relativ zu den Winkelvariationen der ersten reflektierenden Oberfläche, mindestens in einer Kleinwinkelnäherung proportional zum Brechungsindex des nichtfluiden Körpers verstärkt wird.

18. Elektronische Vorrichtung, umfassend einen Lichtstrahlabtaster nach einem der Ansprüche 12-16, wobei die elektronische Vorrichtung eine der folgenden ist:
- ein Kameramodul,
- eine tragbare Computervorrichtung wie ein Smartphone, eine Uhr oder ein Tablet,
- eine Kamera,
- eine Brille,
- eine Messvorrichtung, angeordnet zum Abtasten von Abständen,
- ein Bildprojektor, angeordnet zum Erzeugen eines Bildes durch Abtasten von Lichtstrahlen,
- eine andere elektronische Vorrichtung.

19. Verwendung eines Lichtstrahlabtasters nach einem der Ansprüche 12-16 zum Abtasten und Projizieren des Abtaststrahls.

## Revendications

1. Dispositif de balayage optomécanique (100) agencé pour dévier au moins un faisceau lumineux incident (191), comprenant
- une première surface réfléchissante (M1),
- une deuxième surface réfléchissante (M2),
- un corps non fluide (110) transparent, déformable, comprenant une première surface (111) du corps agencée en contact avec la première surface réfléchissante (M1) ou agencée avec une couche intermédiaire entre la première surface (111) du corps et la première surface réfléchissante (M1) dans lequel la couche intermédiaire relie le corps non fluide (110) à la première surface réfléchissante (M1),
et une deuxième surface (112) du corps opposée agencée en contact avec la deuxième surface réfléchissante (M2) ou agencée avec une couche intermédiaire entre la deuxième surface (112) du corps et la deuxième surface réfléchissante (M2) dans lequel la couche intermédiaire relie le corps non fluide (110) à la deuxième surface réfléchissante (M2), dans lequel
l'indice de réfraction du corps non fluide est supérieur à l'indice de réfraction de l'air qui est 1,
- un système (120) d'actionneur comprenant un ou plusieurs actionneurs (121) agencés pour déplacer la première surface réfléchissante (M1) de sorte qu'un angle (θ) de la première surface réfléchissante (M1) soit réglable, dans lequel l'angle (θ) réglable fournit un angle d'incidence réglable au niveau de la première surface réfléchissante,
- une première fenêtre (131) agencée pour recevoir et transmettre l'au moins un faisceau lumineux incident dans le corps non fluide,
- une deuxième fenêtre (132) agencée pour recevoir et réfracter l'au moins un faisceau lumineux incident hors du corps non fluide, où la première fenêtre et la deuxième fenêtre sont agencées adjacentes à une ou plusieurs surfaces du corps non fluide avec la deuxième surface réfléchissante (M2) agencée de sorte que, pendant le fonctionnement du dispositif de balayage optomécanique, le faisceau lumineux incident soit transmis hors du corps non fluide après avoir été réfléchi successivement par la première surface réfléchissante (M1) et ensuite par la deuxième surface réfléchissante (M2) de sorte que l'amplification angulaire de l'angle dudit faisceau lumineux incident transmis hors du corps non fluide par rapport aux variations angulaires de la première surface réfléchissante soit amplifiée proportionnellement à l'indice de réfraction du corps non fluide, au moins dans l'approximation des petits angles.

2. Dispositif de balayage optomécanique (100) selon la revendication 1, comprenant
- une troisième surface réfléchissante (M3), dans lequel
- la première surface (111) du corps est agencée en contact avec les première et troisième surfaces réfléchissantes (M1, M3) ou agencée avec une couche intermédiaire entre la première surface (112) du corps et les première et troisième surfaces réfléchissantes (M1, M3), et
- le système (120) d'actionneur est agencé pour déplacer les première et troisième surfaces réfléchissantes (M1, M3) de sorte qu'un angle des première et troisième surfaces réfléchissantes (M1, M3) soit réglable.

3. Dispositif de balayage optomécanique selon l'une quelconque des revendications précédentes, dans lequel la première fenêtre (131), la deuxième fenêtre (132) et la deuxième surface réfléchissante (M2) sont sous la forme d'éléments sans contact séparés.

4. Dispositif de balayage optomécanique selon l'une quelconque des revendications précédentes, dans lequel la deuxième surface réfléchissante (M2) et la première fenêtre (131) s'étendent côte à côte sur au moins une partie de la deuxième surface (112) du corps le long d'une direction de propagation (181) du faisceau lumineux incident (191).

5. Dispositif de balayage optomécanique selon l'une quelconque des revendications précédentes, comprenant en outre une surface réfléchissante encastrée (M4) encastrée dans le corps non fluide (110) transparent, déformable, et agencée pour diriger le faisceau lumineux incident (191) vers la première surface réfléchissante (M1).

6. Dispositif de balayage optomécanique selon l'une quelconque des revendications précédentes, dans lequel le dispositif de balayage optomécanique (100) comprend un deuxième système (120a) d'actionneur comprenant un ou plusieurs actionneurs (121) agencés pour déplacer la deuxième surface réfléchissante (M2) de sorte qu'un angle de la deuxième surface réfléchissante (M2) soit réglable.

7. Dispositif de balayage optomécanique selon l'une quelconque des revendications précédentes, dans lequel la deuxième surface réfléchissante (M2) est supportée par un corps non fluide (502) transparent, déformable supplémentaire, situé entre la deuxième surface réfléchissante (M2) et le corps non fluide (110) transparent, déformable.

8. Dispositif de balayage optomécanique selon la revendication 2, dans lequel le système (120) d'actionneur est agencé pour déplacer les première et troisième surfaces réfléchissantes (M1, M3) indépendamment l'une de l'autre de sorte que les angles de la première surface réfléchissante (M1) et de la troisième surface (M3) puissent être réglés indépendamment l'un de l'autre.

9. Dispositif de balayage optomécanique selon l'une quelconque des revendications 2 et 8, comprenant un troisième système (951) d'actionneur agencé pour déplacer la troisième surface réfléchissante (M3) ou une autre surface réfléchissante (952) comprise par le dispositif de balayage optomécanique de sorte qu'un angle supplémentaire de la troisième surface réfléchissante (M3) ou l'autre surface réfléchissante (952) soit réglable pour dévier le faisceau incident dans une direction hors d'un plan d'incidence du faisceau incident (191), par exemple perpendiculaire au plan d'incidence, dans lequel le plan d'incidence est défini par rapport à la première surface réfléchissante.

10. Dispositif de balayage optomécanique selon l'une quelconque des revendications 2 et 8 à 9, dans lequel la deuxième fenêtre (132) est en outre agencée pour réfléchir un deuxième faisceau lumineux incident (191a) des au moins un faisceau lumineux incident vers la troisième surface réfléchissante (M3), et la première fenêtre (131) est en outre agencée pour recevoir et transmettre le deuxième faisceau lumineux incident (191a) hors du corps non fluide.

11. Dispositif de balayage optomécanique selon l'une quelconque des revendications précédentes, dans lequel une propriété optique telle que l'indice de réfraction ou un nombre d'Abbe du corps non fluide et/ou de l'une quelconque des première et deuxième fenêtres (131, 132) est différente à au moins deux emplacements du corps non fluide et/ou de l'une quelconque des première et deuxième fenêtres (131, 132), tel que dans lequel la propriété optique varie progressivement en fonction de l'emplacement le long d'une direction donnée.

12. Dispositif de balayage à faisceau lumineux (190), comprenant le dispositif de balayage optomécanique (100) selon l'une quelconque des revendications 1 à 11 et un dispositif lumineux (192).

13. Dispositif de balayage à faisceau lumineux selon la revendication 12, dans lequel le dispositif lumineux comprend deux sources de lumière ou plus agencées pour générer deux faisceaux lumineux incidents ou plus présentant des angles d'incidence (α1, α2) différents et/ou des gammes de longueurs d'onde non superposées différentes.

14. Dispositif de balayage à faisceau lumineux selon la revendication 13, dans lequel le dispositif de balayage à faisceau lumineux comprend en outre un dispositif de commande agencé pour alimenter séquentiellement les deux sources de lumière ou plus en fonction d'un paramètre d'inclinaison obtenu relatif à l'angle de la première surface réfléchissante (M1).

15. Dispositif de balayage à faisceau lumineux selon l'une quelconque des revendications 13 à 14, dans lequel le dispositif de commande est agencé pour alimenter une première parmi deux sources de lumière ou plus lorsque le paramètre d'inclinaison est dans une première plage et pour alimenter une deuxième des deux sources de lumière ou plus lorsque le paramètre d'inclinaison est dans une deuxième plage qui est différente de la première plage.

16. Dispositif de balayage à faisceau lumineux selon l'une quelconque des revendications 12 à 15, comprenant des premier et deuxième dispositifs lumineux (192, 192a), dans lequel le premier dispositif lumineux est agencé pour injecter un ou plusieurs faisceaux lumineux dans la première fenêtre et le deuxième dispositif lumineux est agencé pour injecter un ou plusieurs faisceaux lumineux dans la deuxième fenêtre.

17. Procédé de fabrication d'un dispositif de balayage optomécanique selon l'une quelconque des revendications 1 à 11, ledit procédé comprenant
- la fourniture d'une première surface réfléchissante (M1),
- la fourniture d'une deuxième surface réfléchissante (M2),
- la fourniture d'un corps non fluide (110) transparent, déformable, comprenant une première surface (111) du corps agencée en contact avec la première surface réfléchissante (M1) ou agencée avec une couche intermédiaire entre la première surface (111) du corps et la première surface réfléchissante (M1) dans lequel la couche intermédiaire relie le corps non fluide (110) à la première surface réfléchissante (M1), et une deuxième surface (112) du corps opposée agencée en contact avec une deuxième surface réfléchissante (M2) ou agencée avec une couche intermédiaire entre la deuxième surface (112) du corps et la deuxième surface réfléchissante (M2) dans lequel la couche intermédiaire relie le corps non fluide (110) à la deuxième surface réfléchissante (M2), dans lequel l'indice de réfraction du corps non fluide est supérieur à l'indice de réfraction de l'air qui est 1,
- la fourniture d'un système (120) d'actionneur comprenant un ou plusieurs actionneurs (121) agencés pour déplacer la première surface réfléchissante (M1) de sorte qu'un angle (θ) de la première surface réfléchissante (M1) soit réglable, dans lequel l'angle réglable (θ) fournit un angle d'incidence réglable au niveau de la première surface réfléchissante,
- la fourniture d'une première fenêtre (131) agencée pour recevoir et transmettre l'au moins un faisceau lumineux incident dans le corps non fluide,
- la fourniture d'une deuxième fenêtre (132) agencée pour recevoir et réfracter l'au moins un faisceau lumineux incident hors du corps non fluide, où la première fenêtre et la deuxième fenêtre sont agencées adjacentes à une ou plusieurs surfaces du corps non fluide avec la deuxième surface réfléchissante (M2) agencée de sorte que, pendant le fonctionnement du dispositif de balayage optomécanique, le faisceau lumineux incident soit transmis hors du corps non fluide après avoir été réfléchi successivement par la première surface réfléchissante (M1) et ensuite par la deuxième surface réfléchissante (M2) de sorte que l'amplification angulaire de l'angle dudit faisceau lumineux incident transmis hors du corps non fluide par rapport aux variations angulaires de la première surface réfléchissante soit amplifiée proportionnellement à l'indice de réfraction du corps non fluide, au moins dans l'approximation des petits angles.

18. Dispositif électronique comprenant un dispositif de balayage à faisceau lumineux selon l'une quelconque des revendications 12 à 16, dans lequel le dispositif électronique est l'un quelconque de :
- un module de caméra,
- un dispositif informatique portable tel qu'un smartphone, une montre, une tablette,
- une caméra,
- une paire de lunettes,
- un dispositif de mesure agencé pour le balayage de distances,
- un projecteur d'image agencé pour créer une image par balayage de faisceaux lumineux,
- un autre dispositif électronique.

19. Utilisation d'un dispositif de balayage à faisceau lumineux selon l'une quelconque des revendications 12 à 16 pour balayer et projeter le faisceau de balayage.
